# EUROPEAN PATENT APPLICATION

(11) **EP 4 414 840 A1**
(43) Date of publication of application: **14.08.2024**
(21) Application number: 24155794.1
(22) Date of filing: 05.02.2024
(51) Int. Cl.: G06F 9/48, G06F 9/50

(54) **METHOD AND APPARATUS FOR CONTROLLING PROCESSOR TO EXECUTE TASKS, AND ELECTRONIC DEVICE**

(30) Priority: 13.02.2023 CN 202310113476
(71) Applicant: Nanjing Horizon Robotics Integrated Circuit Co., Ltd., Nanjing, Jiangsu 210046 (CN)
(72) Inventor: SUN, Zhe, Nanjing, 210046 (CN)
(74) Representative: Dehns Germany Partnerschaft mbB

(57) **Abstract**

Disclosed are a method for controlling a processor to execute tasks, a computer readable storage medium and an electronic device. The method includes: determining a hardware parameter of the processor and task description information of at least one task group; determining an orchestration period of the processor based on a task period corresponding to the at least one task group; orchestrating, based on the hardware parameter of the processor and the task description information, each task in the at least one task group according to an orchestration rule during the orchestration period, to obtain a task execution sequence; and executing all the tasks in the at least one task group based on the task execution sequence. Thus during task orchestration, execution time of each task is limited through the orchestration period, thereby enabling to execute each task on time, resolving a problem about real-time execution of a deterministic task.

## Description

### RELATED APPLICATION INFORMATION

This application claims priority to a Chinese patent application Ser. No. 202310113476.5 filed on February 13, 2023.

### FIELD OF THE INVENTION

This disclosure relates to the technical field of integrated circuits, and in particular, to a method and an apparatus for controlling a processor to execute tasks, and an electronic device.

### BACKGROUND OF THE INVENTION

Before a task in a hardware system is executed, an execution sequence for various tasks may usually be orchestrated in advance by using a scheduler, so that during scheduling, the tasks may be executed according to the orchestrated sequence.

### SUMMARY OF THE INVENTION

Tasks in a hardware system include a deterministic task. The deterministic task needs to be executed strictly according to appointed time. However, when the tasks in the hardware system are orchestrated, execution time of each task is not considered in an orchestration sequence of the tasks. As a result, timely execution of the deterministic task cannot be ensured.

To resolve the foregoing technical problem, this disclosure is proposed. Embodiments of this disclosure provide a method and an apparatus for controlling a processor to execute tasks, and an electronic device. When a task execution sequence for each task in a task group is generated, a hardware parameter of the processor and a task period corresponding to the task group are fully considered, and an orchestration period is set by using the task period corresponding to the task group. During the orchestration period, the tasks in the task group are orchestrated to generate the task execution sequence that contains execution time of each task. Subsequently, the tasks are executed based on the task execution sequence, so that each task can be executed on time, thereby resolving a problem about real-time execution of a deterministic task.

According to an aspect of this disclosure, a task orchestration method is provided, including: determining a hardware parameter of a processor and task description information of at least one task group; determining an orchestration period of the processor based on a task period corresponding to the at least one task group; orchestrating, based on the hardware parameter of the processor and the task description information, each task in the at least one task group according to an orchestration rule during the orchestration period, to obtain a task execution sequence; and executing all the tasks in the at least one task group based on the task execution sequence.

Based on this solution, during task orchestration, the tasks are orchestrated during the orchestration period based on a hardware resource (that is, the hardware parameter of the processor), information about the task group (that is, the task description information of the task group), and a newly introduced time characteristic (that is, the orchestration period), to generate the task execution sequence. In this way, each task can be executed on time, thereby ensuring real-time execution of the task and improving task execution efficiency.

According to another aspect of this disclosure, an apparatus for controlling a processor to execute tasks is provided, including: a first determining module, configured to determine a hardware parameter of the processor and task description information of at least one task group; a second determining module, configured to determine an orchestration period of the processor based on a task period corresponding to the at least one task group; an orchestration module, configured to orchestrate, based on the hardware parameter of the processor and the task description information, each task in the at least one task group according to an orchestration rule during the orchestration period, to obtain a task execution sequence; and an execution module, configured to execute all the tasks in the at least one task group based on the task execution sequence.

According to an aspect of this disclosure, a non-transitory computer readable storage medium is provided, wherein the storage medium stores a computer program, and the computer program is used for implementing any method described above.

According to an aspect of this disclosure, an electronic device is provided, wherein the electronic device includes: a processor; and a memory configured to store processor-executable instructions, wherein the processor is configured to read the executable instructions from the memory, and execute the instructions to implement any method described above.

### BRIEF DESCRIPTION OF THE DRAWINGS

FIG. 1 is a schematic diagram of a structure of an electronic device according to an exemplary embodiment of this disclosure;
FIG. 2 is a schematic flowchart 1 of a method for controlling a processor to execute tasks according to an exemplary embodiment of this disclosure;
FIG. 3 is a schematic diagram of a structure of a task group 30 according to an exemplary embodiment of this disclosure;
FIG. 4 is a schematic flowchart 2 of a method for controlling a processor to execute tasks according to an exemplary embodiment of this disclosure;
FIG. 5 is a schematic flowchart 3 of a method for controlling a processor to execute tasks according to an exemplary embodiment of this disclosure;
FIG. 6 is a schematic flowchart 4 of a method for controlling a processor to execute tasks according to an exemplary embodiment of this disclosure;
FIG. 7 is a schematic diagram of a structure of a task group 70 according to an exemplary embodiment of this disclosure;
FIG. 8 is a schematic diagram of a structure of a task group 80 according to an exemplary embodiment of this disclosure;
FIG. 9 is a schematic flowchart 5 of a method for controlling a processor to execute tasks according to an exemplary embodiment of this disclosure;
FIG. 10 is a schematic flowchart 6 of a method for controlling a processor to execute tasks according to an exemplary embodiment of this disclosure;
FIG. 11 is a schematic diagram of an initialization tree diagram corresponding to a task group 30 according to an exemplary embodiment of this disclosure;
FIG. 12 is a schematic diagram of a tree diagram corresponding to a task group 30 according to an exemplary embodiment of this disclosure;
FIG. 13 is a schematic diagram of a depth map corresponding to a task group 30 according to an exemplary embodiment of this disclosure;
FIG. 14 is a schematic diagram of a task execution sequence corresponding to a task group 30 according to an exemplary embodiment of this disclosure;
FIG. 15 is a schematic flowchart 7 of a method for controlling a processor to execute tasks according to an exemplary embodiment of this disclosure;
FIG. 16 is a schematic diagram of a task execution sequence corresponding to a task group 70 and a task group 80 according to an exemplary embodiment of this disclosure;
FIG. 17 is a schematic flowchart 8 of a method for controlling a processor to execute tasks according to an exemplary embodiment of this disclosure;
FIG. 18 is a diagram of a structure of an apparatus for controlling a processor to execute tasks according to an exemplary embodiment of this disclosure; and
FIG. 19 is a diagram of a structure of an electronic device according to an exemplary embodiment of this disclosure.

### DETAILED DESCRIPTION OF THE EMBODIMENTS

Exemplary embodiments of this disclosure are described below in detail with reference to the accompanying drawings. Obviously, the described embodiments are merely a part, rather than all of embodiments of this disclosure. It should be understood that this disclosure is not limited by the exemplary embodiments described herein.

Currently, to-be-executed tasks in a hardware system include a deterministic task. The deterministic task critically relies on real-time scheduling of the hardware system. During an execution process, the deterministic task needs to be executed strictly according to appointed start time or end time.

Generally, a scheduler may orchestrate to-be-executed tasks based on constraints such as priorities of the tasks, dependency relationships between the tasks, and allocatable computing resources, to generate a task execution sequence. However, the deterministic task has strict limitations on execution time, while the task execution sequence obtained according to the foregoing manner does not limit execution time of each task. Therefore, real-time execution of the deterministic task cannot be ensured according to this manner.

Regarding this, an embodiment of this disclosure provides a task orchestration method. According to this method, firstly, a hardware parameter of a processor and task description information of a task group are determined. Subsequently, an orchestration period of the processor is obtained based on a task period corresponding to the task group. Subsequently, each task in the task group is orchestrated according to an orchestration rule during the orchestration period based on the hardware parameter of the processor and the task description information of the task group, to obtain a task execution sequence. Finally, all tasks in the task group are executed based on the task execution sequence. According to this disclosure, during task orchestration, not only a hardware resource (that is, the hardware parameter of the processor) and information about the task group (that is, the task description information of the task group) are considered, but also a time characteristic (that is, the orchestration period) is introduced. Specific execution time of each task is limited based on the orchestration period. Therefore, the task execution sequence of the task group that is generated based on the hardware resource, the information about the task group, and the orchestration period can make each task executed on time.

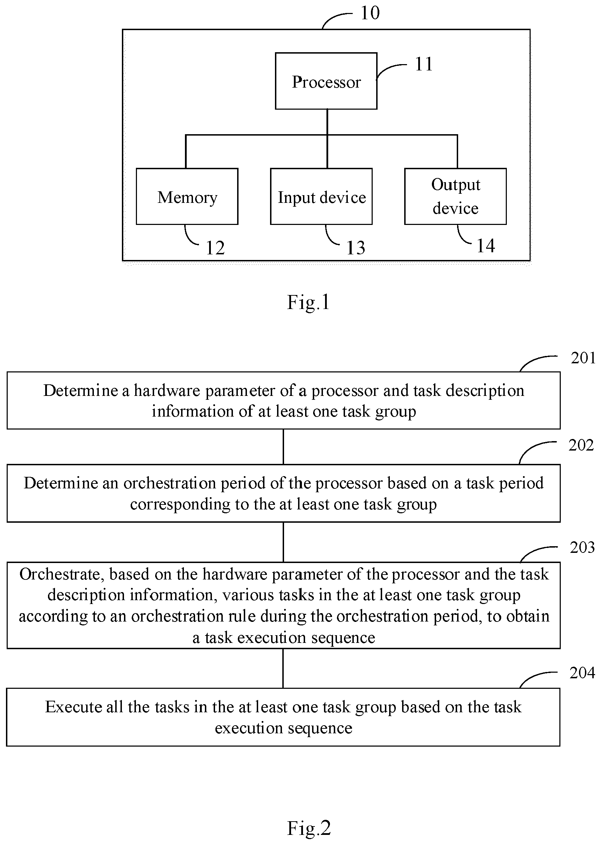

The task orchestration method provided in this embodiment of this disclosure may be applied to an electronic device. The electronic device may include, but is not limited to, a personal computer, a server computer, a multi-processor system, and a microprocessor-based system. As shown in FIG. 1, an electronic device 10 includes at least one processor 11 and a memory 12.

The processor 11 is configured to implement the task orchestration method according to this embodiment of this disclosure. The processor 11 may be a high-performance central processing unit (CPU), a graphics processing unit (GPU), or another processor that supports instruction sequence compilation for a neural network, or another form of processing unit having a compilation processing capability and/or an instruction execution capability.

The memory 12 may include one or more computer program products. The computer program products may include various forms of computer readable storage media, such as a volatile memory and/or a non-volatile memory. The volatile memory may include, for example, a random-access memory (RAM) and/or a cache. The nonvolatile memory may include, for example, a read-only memory (ROM), a hard disk, and a flash memory. One or more computer program instructions may be stored on the computer readable storage medium. The processor 11 may execute a program instruction to implement the task orchestration method described below.

In some embodiments, as shown in FIG. 1, the electronic device 10 may further include an input device 13 and an output device 14. The input device 13 may include, for example, a keyboard and a mouse, for a developer to enter description information of the task group, such as the task period corresponding to the task group. The output device 14 may include, for example, a display, a speaker, a printer, a communication network, and a remote output device connected by the communication network, for the developer to view a final orchestration result or intermediate data during an orchestration process.

It should be noted that a specific structure of the electronic device 10 is not limited in the embodiments of this disclosure. The electronic device 10 may include more or fewer components than those shown in FIG. 1. For example, the electronic device 10 may further include a bus, an input/output interface, and other components.

FIG. 2 shows a method for controlling a processor to execute tasks according to an embodiment of this disclosure. The method may be applied to the electronic device shown in FIG. 1. As shown in FIG. 2, the method includes the following steps 201 to 204.

Step 201. Determine a hardware parameter of a processor and task description information of at least one task group.

The task description information of the task group may include a task period corresponding to the task group, tasks in the task group, dependency relationships between the tasks in the task group, and worst-case execution time (WCET) of each task in the task group.

The hardware parameter of the processor and the task description information of the task group further need to be determined before task orchestration. An upper limit of hardware resources available for task orchestration in the processor may be determined based on the hardware parameter of the processor. Orchestration is performed based on the hardware resources, so that a situation where the task group cannot be run on the processor after orchestration may be avoided. In some examples, the hardware parameter of the processor may be an available resource of the processor. For example, the hardware parameter of the processor may include a quantity of cores in the processor.

The at least one task group may include one or more task groups, which is not limited in this disclosure. The task group may be described in various forms. For example, the task group may be represented by using a directed acyclic graph (DAG), where the DAG describes the task group in a form of a graph structure. The task group is abstracted as nodes and directed edges in the DAG. The nodes are used to represent each task in the task group. The tasks in the task group may represent same or different operations. For example, the tasks may be convolution, pooling, activation, and downsampling. The directed edges are used to represent flow directions of output data of the tasks in the task group.

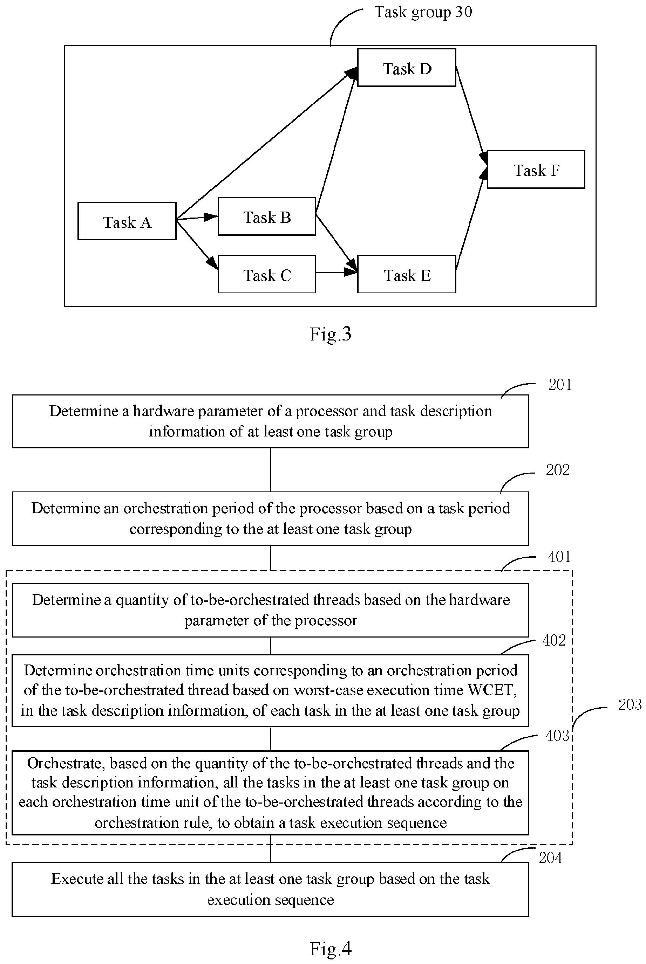

FIG. 3 exemplarily illustrates a task group 30 described by using a DAG. The task group 30 includes a plurality of nodes and a plurality of edges. FIG. 3 exemplarily illustrates nodes in the DAG by using boxes as examples, and exemplarily illustrates edges in the DAG by using arrowed lines as examples.

As shown in FIG. 3, the plurality of nodes in the task group 30 include a task A, a task B, a task C, a task D, a task E, and a task F. The plurality of edges respectively include an edge between the task A and the task B, an edge between the task A and the task C, an edge between the task A and the task D, an edge between the task B and the task E, an edge between the task B and the task D, an edge between the task C and the task E, an edge between the task D and the task F, and an edge between the task E and the task F.

The edge between the task A and the task B is used to indicate that output data of the task A is input to the task B. The edge between the task A and the task C is used to indicate that the output data of the task A is input to the task C. The edge between the task A and the task D is used to indicate that the output data of the task A is input to the task D. The edge between the task B and the task D is used to indicate that output data of the task B is input to the task D. The edge between the task B and the task E is used to indicate that the output data of the task B is input to the task E. The edge between the task C and the task E is used to indicate that output data of the task C is input to the task E. The edge between the task D and the task F is used to indicate that output data of the task D is input to the task F. The edge between the task E and the task F is used to indicate that output data of the task E is input to the task F.

The task description information of the task group is used to indicate a basic situation of the task group. The task period that is in the task description information and that corresponds to the task group refers to a period during which the task group receives input data. For example, on a traffic road, a camera captures images every 2.5 s, and then sends the collected images to the task group through a hardware system in a real-time manner. The task group processes the images after receiving the images. It may be learned from the above that, if a frequency at which the task group receives the input data is 2.5 s/time, the task period corresponding to the task group is 2.5 s.

The dependency relationships between the tasks in the task group may be determined based on flow directions of input data and/or output data of each task. With reference to FIG. 3, the dependency relationships between the tasks in the task group 30 may be determined based on the edges between the tasks. It may be learned from the edges between the tasks in FIG. 3 that, the output data of the task A is input to the task B, the task C, and the task D, respectively. The output data of the task B is input to the task D and the task E, respectively. The output data of the task C is input to the task E. The output data of the task D is input to the task F. The output data of the task E is also input to the task F.

Therefore, the dependency relationships between the tasks in the task group 30 are as follows. The task B and the task C can be executed only after the task A is completed. The task D can be executed only after the task B is completed. The task E can be executed only after the task B and the task C are completed. The task F can be executed only after the task D and the task E are completed. In other words, the task B and the task C both depend on the task A; the task D depends on the task B and the task A; the task E depends on the task C and the task B; and the task F depends on the task D and the task E.

The worst-case execution time WCET of each task in the task group refers to maximum time required for executing each task on the hardware system. The WCET of each task is obtained through pre-testing. During task orchestration, the tasks may be orchestrated during an orchestration period based on the WCET of each task, thereby ensuring that all the tasks may be executed during the orchestration period.

Step 202. Determine an orchestration period of the processor based on a task period corresponding to the at least one task group.

It may be learned from step 201 that, the task period corresponding to the task group may be a period during which the task group receives input data. When receiving the input data, the task group processes the input data.

To ensure that the input data can be processed in a timely manner, the task group needs to receive the input data during each task period. The task group is orchestrated during the orchestration period. If the orchestration period of the processor is determined based on the task period of the task group, it is equivalent to that an association relationship is established for the task period and the orchestration period. Subsequently, the association relationship between the task period and the orchestration period may be used to enable the task group to receive the input data during each task period.

Step 203. Orchestrate, based on the hardware parameter of the processor and the task description information, each task in the at least one task group according to an orchestration rule during the orchestration period, to obtain a task execution sequence.

The orchestration rule is used to further limit an orchestration sequence for the tasks, to make the task execution sequence more reasonable.

In some examples, the hardware parameter of the processor determines a quantity of threads that can be orchestrated, and the task description information determines an order in which the tasks are orchestrated and maximum time required for executing each task. Therefore, the tasks in the at least one task group may be orchestrated according to the orchestration rule during the orchestration period based on the hardware parameter of the processor and the task description information, to obtain the task execution sequence.

Step 204. Execute all the tasks in the at least one task group based on the task execution sequence.

After the task execution sequence is generated, the processor executes the tasks in the at least one task group sequentially according to the task execution sequence.

The processor in this embodiment of this disclosure fully considers the hardware parameter of the processor, the task description information of the task group, and the task period corresponding to the task group when generating the task execution sequence. Therefore, the generated task execution sequence contains execution time of each task. In this way, the deterministic task can be executed within specified duration, thereby ensuring real-time execution of the deterministic task and improving execution efficiency of the deterministic task.

In some embodiments, as shown in FIG. 4, on the basis of the embodiment shown in FIG. 2, step 203 may include steps 401 to 403.

Step 401. Determine a quantity of to-be-orchestrated threads in the processor based on the hardware parameter of the processor.

In some examples, determining the quantity of the to-be-orchestrated threads in the processor based on the hardware parameter of the processor, may be that, determining the quantity of the to-be-orchestrated threads in the processor based on a quantity of cores in the processor. The to-be-orchestrated threads may be unallocated threads in the processor (for example, available threads in the processor), or may be all threads in the processor.

When there are a plurality of to-be-orchestrated threads, orchestration periods of the plurality of to-be-orchestrated threads are the same. For example, if there are two to-be-orchestrated threads, which respectively are a thread 1 and a thread 2, orchestration periods of the thread 1 and the thread 2 are the same.

Step 402. Determine orchestration time units corresponding to an orchestration period of the to-be-orchestrated thread based on worst-case execution time WCET, in the task description information, of each task in the at least one task group.

The orchestration period includes a plurality of orchestration time units.

The orchestration period of the processor may be obtained according to step 202. The orchestration period of the processor is orchestration periods of the to-be-orchestrated threads. Because the tasks in the task group are orchestrated during the orchestration period, if the tasks in the task group are directly orchestrated during the orchestration period, there may be a situation in which a length of time occupied by each orchestrated task is unreasonable. To ensure that the length of time occupied by each task is reasonable when the tasks are orchestrated during the orchestration period, the orchestration period may be divided more precisely to obtain the plurality of orchestration time units corresponding to the orchestration period.

For example, dividing the orchestration period may be performed by dividing the orchestration periods of the to-be-orchestrated threads based on the WCET, in the task description information, of each task in the at least one task group.

As the task group contains a plurality of tasks, the orchestration time unit may be determined based on a time unit of the WCET of each task, and then the orchestration period may be divided based on the orchestration time unit, so as to obtain the plurality of orchestration time units.

For example, in the task group 30 shown in FIG. 3, that the WCET of the task A is 4 ms, the WCET of the task B is 8 ms, the WCET of the task C is 6 ms, the WCET of the task D is 7 ms, the WCET of the task E is 5 ms, and the WCET of the task F is 9 ms is used as an example. The orchestration time unit may be determined as 1 ms based on the time unit ms of each task. In this way, when the tasks A to F are orchestrated during the orchestration period, it can be ensured that each task is orchestrated reasonably based on the orchestration time unit of 1 ms.

Step 403. Orchestrate, based on the quantity of the to-be-orchestrated threads and the task description information, all the tasks in the at least one task group on each orchestration time unit of the to-be-orchestrated threads according to the orchestration rule, to obtain the task execution sequence.

In some examples, there are a plurality of to-be-orchestrated threads, each to-be-orchestrated thread corresponds to one orchestration period, and the orchestration periods corresponding to the plurality of to-be-orchestrated threads are the same. In this case, during orchestration of each task, all the tasks in the task group may be orchestrated on each orchestration time unit of the orchestration period corresponding to each to-be-orchestrated thread according to the orchestration rule, so as to obtain the task execution sequence.

According to the method for controlling a processor to execute tasks provided in this embodiment of this disclosure, the orchestration time unit in the orchestration period is determined based on the WCET of each task. Therefore, during the orchestration of each task, all the tasks in the task group can be orchestrated on each orchestration time unit of the orchestration period corresponding to each to-be-orchestrated thread according to the orchestration rule, so as to obtain the task execution sequence. The orchestration time unit in this solution is determined based on the WCET of the task. Therefore, it can be ensured that each task is orchestrated reasonably during the orchestration period according to the orchestration time unit, so as to shorten task processing duration and improve task processing efficiency.

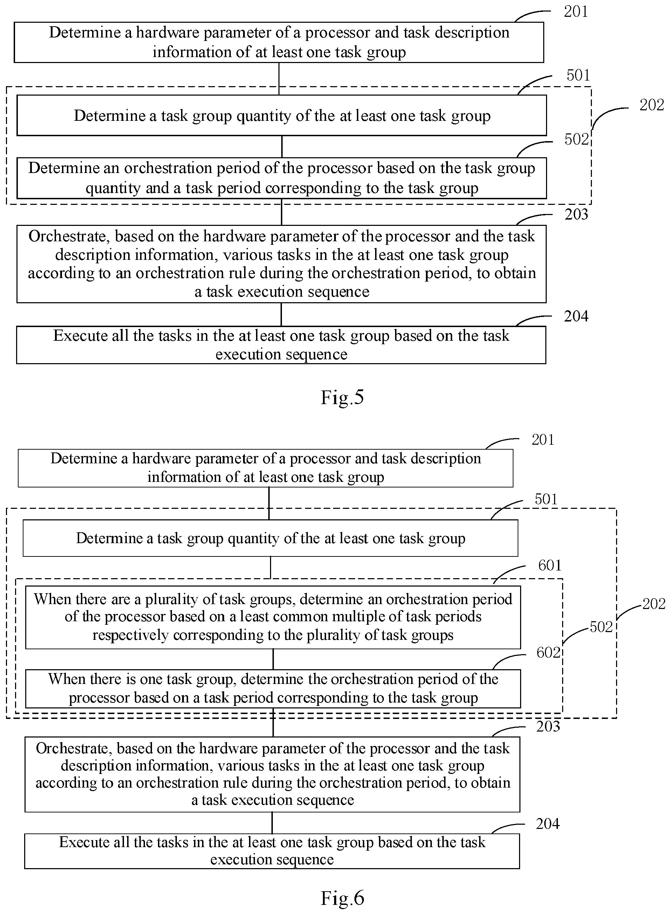

In some embodiments, as shown in FIG. 5, on the basis of the embodiment shown in FIG. 2, step 202 may include steps 501 and 502.

Step 501. Determine a task group quantity of the at least one task group.

For example, the task group quantity of the at least one task group may be one or more, and a specific quantity of task groups is not limited in this embodiment of this disclosure.

Step 502. Determine the orchestration period of the processor based on the task group quantity and the task period corresponding to the task group.

After the task group quantity of the at least one task group is determined, the orchestration period of the processor may be determined based on the task group quantity and the task period corresponding to the task group. Manners for determining the orchestration period vary for different quantities of task groups.

In some embodiments, as shown in FIG. 6, on the basis of the embodiment shown in FIG. 5, step 502 may include steps 601 and 602.

Step 601. When there are a plurality of task groups, determine the orchestration period of the processor based on a least common multiple of task periods respectively corresponding to the plurality of task groups.

When the task group quantity of the at least one task group is more than one, the orchestration period needs to consider a plurality of task periods corresponding to the plurality of task groups. If the plurality task groups correspond to different task periods, each task group may receive input data during the respective corresponding task period. To ensure timely processing of the received input data, the orchestration period needs to be determined based on the task period corresponding to each task group.

For example, the orchestration period of the processor may be determined based on the least common multiple of the task periods respectively corresponding to the plurality of task groups. The plurality of task groups respectively correspond to same or different task periods. Therefore, when the plurality of task groups respectively correspond to different task periods, the orchestration period of the processor is determined based on the least common multiple of the task periods respectively corresponding to the plurality of task groups. In this way, it may be ensured that all tasks in each task group may be completely orchestrated at least once during the orchestration period, and the input data received by each task group during the task period thereof may be processed timely.

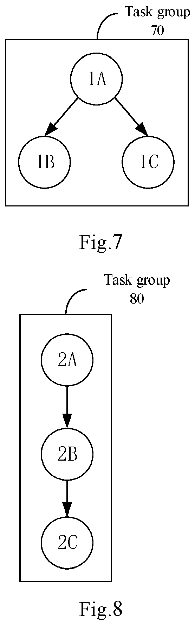

FIG. 7 exemplarily shows a task group 70, and FIG. 8 exemplarily shows a task group 80. That the at least one task group includes the task group 70 shown in FIG. 7 and the task group 80 shown in FIG. 8 is used as an example. A task period corresponding to the task group 70 is 20 ms. A task period corresponding to the task group 80 is 40 ms. Based on the task period corresponding to the task group 70 and the task period corresponding to the task group 80, it is determined that a least common multiple of the task period corresponding to the task group 70 and the task period corresponding to the task group 80 is 40 ms. Therefore, the orchestration period of the processor is 40 ms.

Step 602. When there is one task group, determine the orchestration period of the processor based on a task period corresponding to the task group.

When the task group quantity of the at least one task group is one, the orchestration period only needs to consider the task period corresponding to this task group. Based on the task period corresponding to the task group, the task period corresponding to the task group may be determined as the orchestration period of the processor.

For example, that the at least one task group is the task group 30 shown in FIG. 3 is used as an example. If the task period corresponding to the task group 30 is 25 ms, the orchestration period corresponding to the task group 30 is also 25 ms.

According to the method for controlling a processor to execute tasks provided in this embodiment of this disclosure, by determining the orchestration period of the processor based on the task group quantity, when the tasks in each task group is orchestrated during the orchestration period, it can be ensured that all the tasks in each task group are completely orchestrated at least once during the orchestration period. At the same time, it is ensured that the input data received by each task group during the respective task period can be processed timely, thereby improving data processing efficiency.

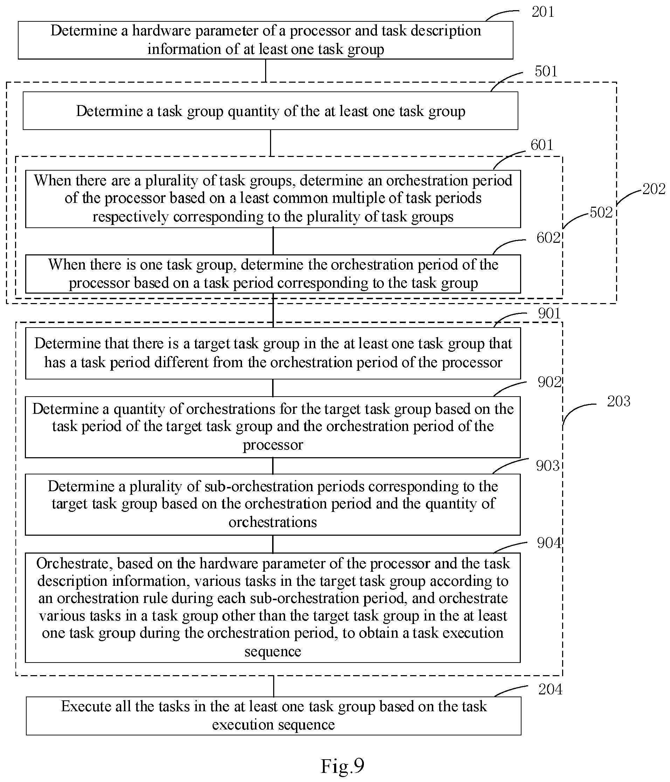

In some embodiments, as shown in FIG. 9, on the basis of the embodiment shown in FIG. 6, when there are a plurality of task groups, step 203 includes steps 901 to 904.

Step 901. Determine that there is a target task group in the at least one task group that has a task period different from the orchestration period of the processor.

When the at least one task group includes a plurality of task groups, it may be learned from step 601 that, the orchestration period of the processor is determined based on the least common multiple of the task periods corresponding to the plurality of task groups. If the task periods corresponding to the task groups in the plurality of task groups are consistent with each other, the orchestration period determined based on the least common multiple of the task periods corresponding to the plurality of task groups is the same as the task period corresponding to each task group. For example, the plurality of task groups are a task group M and a task group N. If a task period of the task group M is 2 s and a task period of the task group N is 2 s, the orchestration period is also 2 s.

If the task periods corresponding to the plurality of task groups are inconsistent with each other, the orchestration period determined based on the least common multiple of the task periods corresponding to the plurality of task groups may be greater than or equal to the task periods respectively corresponding to the plurality of task groups. When the orchestration period is different from the task period corresponding to a certain task group, the task group is determined as the target task group. For example, the plurality of task groups are the task group 70 shown in FIG. 7 and the task group 80 shown in FIG. 8. The task period corresponding to the task group 70 is 20 ms. The task period corresponding to the task group 80 is 40 ms. Based on the task period corresponding to the task group 70 and the task period corresponding to the task group 80, it is determined that the orchestration period of the processor is 40 ms. Because the task period of the task group 70 is different from the orchestration period of the processor, the target task group is the task group 70.

For another example, the plurality of task groups are a task group O and a task group P, where a task period corresponding to the task group O is 3 s, and a task period corresponding to the task group P is 4 s. In this case, based on the task period corresponding to the task group O and the task period corresponding to the task group P, it is determined that the orchestration period of the processor is 12 s. Because both the task period of the task group O and the task period of the task group P are different from the orchestration period of the processor, the target task groups are the task group O and the task group P.

Step 902. Determine a quantity of orchestrations for the target task group based on the task period of the target task group and the orchestration period of the processor.

It may be learned from step 201 that, the task period is a period during which the task group receives input data. When the orchestration period is the same as the task period, if the task group receives input data during the orchestration period, the task group may process the input data. Because the orchestration period is the same as the task period, when the task group completes processing on the input data, if receiving input data again, the task group may continue to process the input data. Therefore, the task group only needs to be orchestrated once during one orchestration period. Moreover, this orchestration manner may not result in a situation where a previous piece of input data has not been processed yet but a next piece of input data is already received.

When the orchestration period is different from the task period, because the orchestration period is determined based on the least common multiple of a plurality of task periods, the orchestration period is a multiple of the task periods. Therefore, input data may be received for a plurality of times during one orchestration period. If the target task group is orchestrated only once during the orchestration period, after completing processing on current input data, the target task group may be unable to process subsequently received input data. To ensure that the target task group can process the data in a timely manner every time the input data is input, the target task group may be orchestrated for a plurality of times during the orchestration period.

The quantity of orchestrations for the target task group may be determined based on the task period of the target task group and the orchestration period of the processor. For example, the quantity of orchestrations may be a ratio of the orchestration period of the processor to the task period of the target task group.

For example, the target task group is the task group 70 shown in FIG. 7. The task period of the task group 70 is 20 ms, and the orchestration period of the processor is 40 ms. Because the task period of the task group 70 is different from the orchestration period of the processor, the task group 70 may be orchestrated for a plurality of times during the orchestration period. The quantity of orchestrations of the task group 70 may be a ratio of the orchestration period of 40 ms of the processor to the task period of 20 ms of the target task group. Therefore, the quantity of orchestrations of the task group 70 is two.

Step 903. Determine a plurality of sub-orchestration periods corresponding to the target task group based on the orchestration period and the quantity of orchestrations.

When the target task group is orchestrated for a plurality of times, the orchestration period may be divided into a plurality of sub-orchestration periods based on the quantity of orchestrations, and then the target task group may be orchestrated during each sub-orchestration period. For example, the orchestration period of the processor is 40 ms, and the task group 70 is orchestrated twice during the orchestration period. Therefore, the orchestration period may be divided into two sub-orchestration periods, where 0-20 ms is one sub-orchestration period and 20-40 ms is the other sub-orchestration period.

Step 904. Orchestrate, based on the hardware parameter of the processor and the task description information, each task in the target task group according to the orchestration rule during each sub-orchestration period, and orchestrate each task in a task group, other than the target task group, in the at least one task group during the orchestration period, to obtain the task execution sequence.

When there are a plurality of task groups, if there is a target task group in the plurality of task groups, each task in the target task group may be orchestrated according to an orchestration rule during the orchestration period based on the hardware parameter of the processor and the task description information. If task groups other than the target task group also exist in the plurality of task groups, tasks in the task groups, other than the target task group, in the plurality of task groups may be orchestrated according to the orchestration rule during the orchestration period based on the hardware parameter of the processor and the task description information, to obtain the task execution sequence.

According to the method for controlling a processor to execute tasks provided in this embodiment of this disclosure, the target task group and the quantity of orchestrations of the target task group are determined based on the task period and the orchestration period, and the target task group is orchestrated in each sub-orchestration period of the orchestration period according to the orchestration rule. In this way, it can be ensured that the target task group can process input data in a timely manner every time the input data is input, thereby improving a response speed to the input data and avoiding other problems that may be caused by an excessively slow response speed. For example, in a safe vehicle driving scenario, if the response speed to the input data is excessively slow, an airbag may fail to be deployed in a timely manner, which affects life safety of a user. However, according to the solution of this disclosure, the input data may be responded to quickly, thereby ensuring timely deployment of the airbag and improving a safety factor.

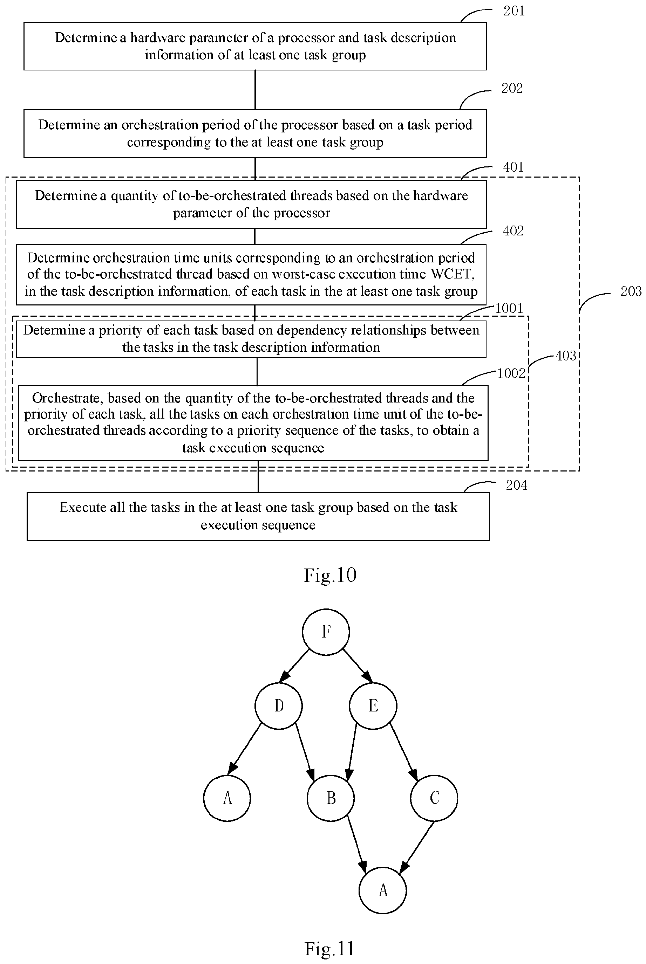

In some embodiments, as shown in FIG. 10, on the basis of the embodiment shown in FIG. 4, step 403 may include steps 1001 and 1002.

Step 1001. Determine a priority of each task based on dependency relationships between the tasks in the task description information.

The dependency relationships between the tasks in the task group refers to relationships that the tasks affect each other. The priority of each task in the task group may be determined based on a degree of influence between the tasks. For example, the priority of each task may be represented by using a depth. A smaller depth indicates a higher priority.

A depth determining method is exemplarily proposed below. The depth determining method includes the following steps:
(1) Determine an adjacency table corresponding to a task group based on dependency relationships between tasks in task description information.

The adjacency table includes driving tasks and dependent tasks of each task. The driving task is used to represent a task that may be driven by the task. The dependent task is used to represent a task that drives execution of the task.

The depth determining method is exemplarily described by using the task group 30 shown in FIG. 3 as an example.

It may be learned from FIG. 3 and step 201 that, the dependency relationships between the tasks in the task group 30 are as follows. The task B and the task C can be executed only after the task A is completed. The task D can be executed only after the task B is completed. The task E can be executed only after the task C is completed. The task F can be executed only after the task D and the task E are completed. In other words, the task B and the task C both depend on the task A; the task D depends on the task B and the task A; the task E depends on the task C and the task B; and the task F depends on the task D and the task E.

The adjacency table shown in the following Table 1 is obtained based on the dependency relationships between the tasks in the task group 30.

**Table 1**

| Task | Driving Task | Dependent task |
|---|---|---|
| A | B, C, and D | / |
| B | D and E | A |
| C | E | A |
| D | F | A and B |
| E | F | B and C |
| F | / | D and E |

It may be learned from Table 1 that driving tasks of the task A are the task B, the task C, and the task D. Driving tasks of the task B are the task D and the task E. A driving task of the task C is the task E. A driving task of the task D is the task F. A driving task of the task E is the task F.

A dependent task of the task B is the task A. A dependent task of the task C is the task A. Dependent tasks of the task D are the task A and the task B. Dependent tasks of the task E are the task B and the task C. Dependent tasks of the task F are the task D and the task E.

As the task A is a start task of the task group 30, a dependent task of the task A is empty. As the task F is an end task of the task group 30 and would not drive another task, a driving task of the task F is empty.

(2) Generate an initialization tree diagram based on the adjacency table.

In some examples, the driving tasks and the dependent tasks of each task in the adjacency table are expressed in a form of an initialization tree diagram, so as to display association relationships between the tasks more clearly.

For example, it may be learned from the adjacency table that the task F is the end task. In the task group 30, the end task has highest dependency on other tasks. Therefore, the task F is used as a first layer in the initialization tree diagram. The dependent tasks of the task F (that is, the task D and the task E) are used as a second layer in the initialization tree diagram. The dependent tasks corresponding to the task D (that is, the task A and the task B) and the dependent tasks corresponding to the task E (that is, the task B and the task C) are used as a third layer in the initialization tree diagram. Since the task A does not have a dependent task, the dependent task corresponding to the task B (that is, the task A) and the dependent task corresponding to the task C (that is, the task A) are used as a fourth layer in the initialization tree diagram, so as to generate the initialization tree diagram shown in FIG. 11. Driving relationships of the tasks in the task group may also be described based on connection relationships between the tasks in the fourth layer to the task in the first layer in the initialization tree diagram.

(3) Process the initialization tree diagram to obtain a tree diagram.

In some examples, processing of the initialization tree diagram includes deleting repeated nodes in the initialization tree diagram, so as to obtain the tree diagram. If the initialization tree diagram does not include repeated nodes, this step may be omitted.

It may be learned from FIG. 11 that, both the third layer and the fourth layer of the initialization tree diagram contain the task A. When the task A is in the third layer, the task A is only related to the task D, while the task D is also related to the task B. When in the fourth layer, the task A is related to the task B, and is also related to the task C.

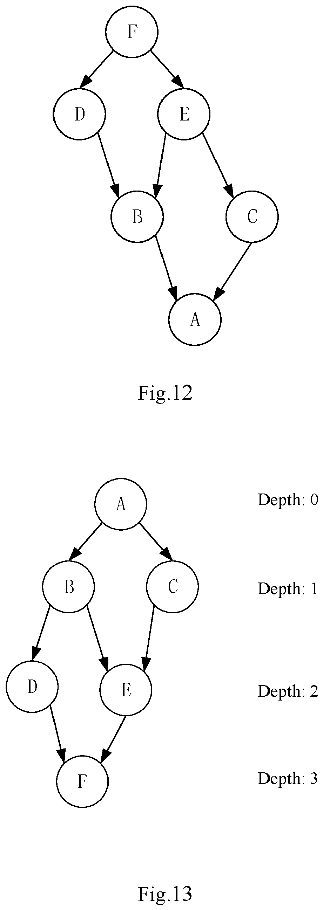

When the task A is in both the third layer and the fourth layer, for the initialization tree diagram, the task A is a repeated node that needs to be deleted. If the task A in the third layer is deleted, it is equivalent to that an association relationship between the task A and the task D is deleted. Since the task D is also related to the task B and the task B is also related to the task A, the association relationship between the task D and the task A may be indirectly displayed through an association relationship between the task B and the task A. If the task A in the fourth layer is deleted, it is equivalent to that the association relationship between the task A and the task B and an association relationship between the task A and the task C are directly deleted. Moreover, the association relationship between the task A and the task B and the association relationship between the task A and the task C cannot be indirectly obtained through the association relationships between the other tasks. Therefore, the task A in the third layer may be deleted to obtain a tree diagram shown in FIG. 12. In the tree diagram shown in FIG. 12, the task F serves as a first layer, the task D and the task E serve as a second layer, the task B and the task C serve as a third layer, and the task A serves as a fourth layer.

(4) Determine a depth of each task based on the tree diagram.

It may be learned from the tree diagram shown in FIG. 12 that, the task A in the fourth layer does not depend on any tasks. Therefore, a depth of the task A is the lowest, being 0. Both the task B and the task C depend on the task A, and can be executed only after the task A is completed. Therefore, depths of the task B and the task C are obtained by adding 1 to the depth of the task A. The task B and the task C have a same depth of 1.

The task D depends on the task A and the task B, and can only be executed after the task B is completed. Therefore, a depth of the task D is obtained by adding 1 to the depth of the task B. Therefore, the depth of the task D is 2.

The task E depends on the task B and the task C, and can be executed only after the task B and the task C are completed. Therefore, a depth of the task E is obtained by adding 1 to the depth of the task B or the task C. Therefore, the depth of the task E is 2. The depths of the task D and the task E are the same.

The task F depends on the task D and the task E, and can be executed only after the task D and the task E are completed. Therefore, a depth of the task F is obtained by adding 1 to the depth of the task D or the task E. Therefore, the depth of the task F is 3. A depth map shown in FIG. 13 is obtained based on the depths of the task A, the task B, the task C, the task D, the task E, and the task F.

It may be learned from the above that, a smaller depth indicates a higher priority. Therefore, a priority sequence of the task A, the task B, the task C, the task D, the task E, and the task F is: the task A>the task B=the task C>the task D=the task E>the task F.

Step 1002. Orchestrate, based on the quantity of the to-be-orchestrated threads and the priority of each task, all the tasks on each orchestration time unit of the to-be-orchestrated threads according to a priority sequence of the tasks, to obtain the task execution sequence.

In some examples, when the at least one task group includes one task group, all the tasks are orchestrated, based on the quantity of the to-be-orchestrated threads and the priority of each task, on each orchestration time unit of the to-be-orchestrated threads according to the priority sequence of the tasks, to obtain the task execution sequence.

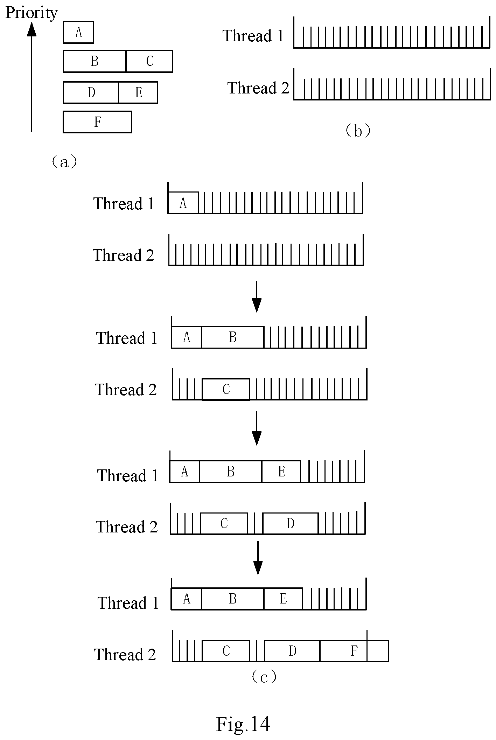

For example, taking the task group 30 shown in FIG. 3 as an example, it may be learned from FIG. 13 that, a priority result graph shown in FIG. 14 (a) may be obtained. The priority result graph indicates that the priority sequence of the task A, the task B, the task C, the task D, the task E, and the task F is: the task A>the task B=the task C>the task D=the task E>the task F. Based on the quantity of the to-be-orchestrated threads and the priority of each task in the task group 30, the tasks in the task group 30 are orchestrated according to the priority sequence of the tasks in a descending order, to obtain the task execution sequence.

In some other examples, when the at least one task group includes a plurality of task groups, all the tasks in the plurality of task groups are orchestrated, based on the quantity of the to-be-orchestrated threads and the priority of each task in the plurality of task groups, on each orchestration time unit of the to-be-orchestrated threads according to the priority sequence of the tasks in the plurality of task groups, to obtain the task execution sequence.

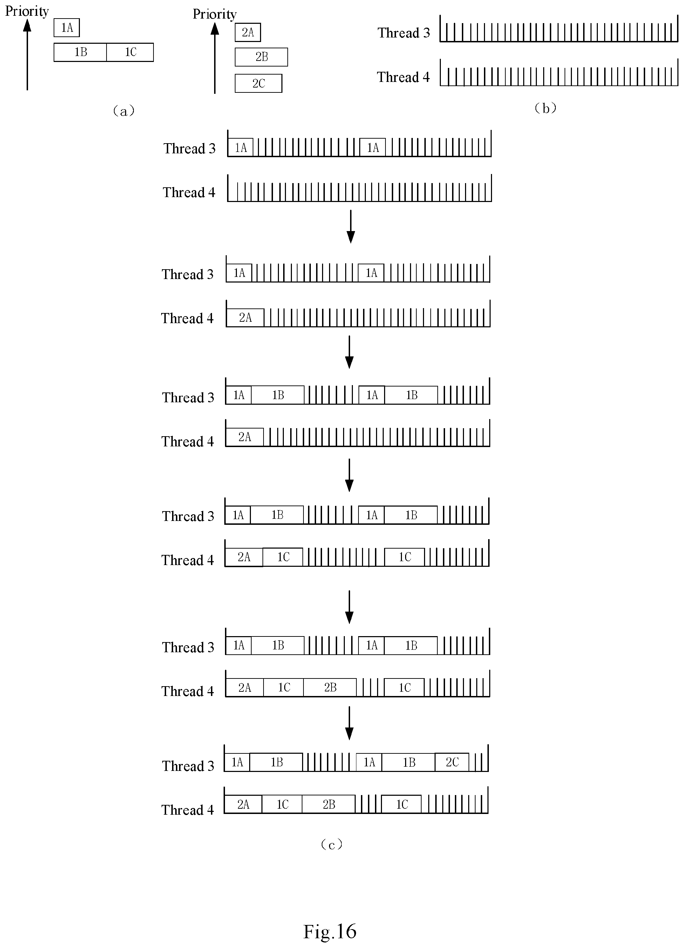

For example, the task group 70 shown in FIG. 7 and the task group 80 shown in FIG. 8 are used as examples. A priority result graph shown in FIG. 16 (a) is obtained according to FIG. 7 and FIG. 8. The priority result graph indicates that a priority sequence of a task 1A, a task 1B, and a task 1C in the task group 70 is: the task 1A>the task 1B=the task 1C. A priority sequence of a task 2A, a task 2B, and a task 2C in the task group 80 is: the task 2A>the task 2B>the task 2C. Based on the quantity of the to-be-orchestrated threads, the priority of each task in the task group 70, and the priority of each task in the task group 80, the task group 70 and the task group 80 are orchestrated according to the priority sequence of the tasks in a descending order, to obtain the task execution sequence.

According to the method for controlling a processor to execute tasks provided in this embodiment of this disclosure, the tasks are orchestrated on each orchestration time unit according to the priority sequence of the tasks based on the dependency relationships between the tasks. In this way, a task with low relevance to another task can be executed preferentially, so as to ensure that each task in the task group completes processing on the input data during the orchestration period, thereby avoiding execution interruption of the tasks in the task group, so that execution efficiency of each task in the task group can be improved.

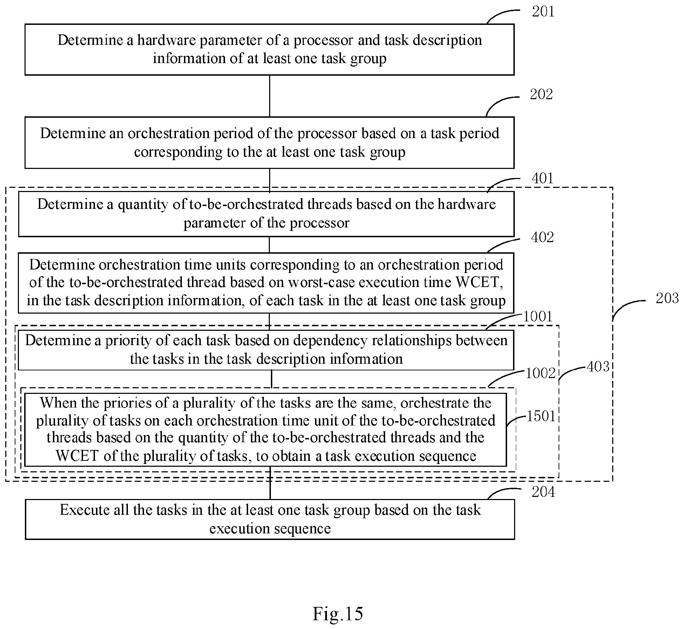

In some embodiments, as shown in FIG. 15, on the basis of the embodiment shown in FIG. 10, step 1002 may include step 1501.

Step 1501. When the priories of a plurality of the tasks are the same, orchestrate the plurality of tasks on each orchestration time unit of the to-be-orchestrated threads based on the quantity of the to-be-orchestrated threads and the WCET of the plurality of tasks, to obtain the task execution sequence.

In some examples, when the at least one task group includes one task group, the tasks are orchestrated in the to-be-orchestrated threads according to the priority sequence of the tasks. If there are a plurality of tasks with the same priorities in the tasks, the plurality of tasks with the same priorities may be further sorted based on the WCET of the plurality of tasks. Finally, the tasks are orchestrated on each orchestration time unit of the to-be-orchestrated threads based on a sorting result, to obtain the task execution sequence.

For example, further sorting the plurality of tasks with the same priorities based on the WCET of the plurality of tasks may be sorting the plurality of tasks according to the WCET of the plurality of tasks in a descending order.

It may be learned from the priority sequence of the task group 30 in step 1002 that, there are a plurality of tasks with the same priorities in the task group 30. The priority of the task B is the same as that of the task C, and the priority of the task D is the same as that of the task E. Regarding such a situation, with reference to the WCET of the plurality of tasks with the same priorities, priority sorting of the task group 30 may be further refined based on the WCET of the plurality of tasks.

It may be learned from step 402 that, the WCET of the task B in the task group 30 is 8 ms, the WCET of the task C is 6 ms, the WCET of the task D is 7 ms, and the WCET of the task E is 5 ms. If the plurality of tasks are sorted based on the respective WCET thereof in a descending order, priority sorting results for the plurality of tasks with the same priorities are: the task B>the task C; and the task D>the task E.

Subsequently, the sorting results for the plurality of tasks with the same priorities are updated into the priority sequence corresponding to the task group 30, to obtain an updated priority sequence of the task group 30. The updated priority sequence of the task group 30 is: the task A>the task B >the task C>the task D>the task E >the task F.

For example, FIG. 14 (b) exemplarily illustrates to-be-orchestrated threads of a processor. There are two to-be-orchestrated threads, which respectively are a thread 1 and a thread 2. The task group 30 shown in FIG. 3 is orchestrated on the thread 1 and the thread 2 shown in FIG. 14 (b). If the task period corresponding to the task group 30 is 25 ms, and the task group quantity of the task group 30 is 1, orchestration periods for the thread 1 and the thread 2 are the same as the task period corresponding to the task group 30, and both are 25 ms, respectively. It may be learned from step 402 that, a unit of the orchestration time unit corresponding to the task group 30 is ms, and one orchestration time unit is 1 ms. Therefore, the orchestration periods for the thread 1 and the thread 2 both include 25 orchestration time units.

According to the updated priority sequence of the task group 30, the tasks in the task group 30 are orchestrated on the orchestration time units of the thread 1 and the thread 2, to obtain a task execution sequence shown in FIG. 14(c). In addition, there may be a plurality of manners for orchestrating the tasks in the task group 30, provided that the foregoing requirements are satisfied. This is not limited in this disclosure.

According to the updated priority sequence of the task group 30, the process of orchestrating the task group 30 is as follows. First, the task A is orchestrated, and the task A may be orchestrated on the thread 1 or the thread 2. For example, FIG. 14(c) shows an orchestration result with the task A orchestrated on the thread 1. It may be learned from step 402 that, if the WCET of the task A is 4 ms, the task A occupies 4 orchestration time units on the thread 1.

The task B may be orchestrated after the orchestration of the task A is completed. The task B may be orchestrated on the thread 1 or the thread 2. The task B depends on only the task A, provided that a position of the task B is orchestrated after that of the task A. For example, FIG. 14(c) shows an orchestration result with the task B orchestrated on the thread 1 as well. It may be learned from step 402 that, if the WCET of the task B is 8 ms, the task B occupies 8 orchestration time units on the thread 1.

The task C may be orchestrated after the orchestration of the task B is completed. Because the task C only depends on the task A, a position of the task C is orchestrated after that of the task A. Because the task B and the task C do not affect each other, to ensure rapid execution of the tasks, when the task B is orchestrated on the thread 1, the task C may be orchestrated on the thread 2. When the task B is orchestrated on the thread 2, the task C may be orchestrated on the thread 1. For example, FIG. 14(c) shows an orchestration result with the task C orchestrated on the thread 2. It may be learned from step 402 that, if the WCET of the task C is 6 ms, the task C occupies 6 orchestration time units on the thread 2.

The task D may be orchestrated after the orchestration of the task C is completed. Because the task D depends on the task A and the task B, and the task B depends on the task A, a position of the task D is orchestrated after that of the task B. The task D may be orchestrated on the thread 1 or the thread 2. For example, FIG. 14(c) shows an orchestration result with the task D orchestrated on the thread 2. It may be learned from step 402 that, if the WCET of the task D is 7 ms, the task D occupies 7 orchestration time units on the thread 2.

The task E may be orchestrated after the orchestration of the task D is completed. Because the task E depends on the task B and the task C, a position of the task E is orchestrated after those of the task B and the task C. Because the task D depends on the task B and is orchestrated before the task E, to further ensure rapid execution of the tasks, when the task D is orchestrated on the thread 1, the task E may be orchestrated on the thread 2. When the task D is orchestrated on the thread 2, the task E may be orchestrated on the thread 1. For example, FIG. 14(c) shows an orchestration result with the task E orchestrated on the thread 1. It may be learned from step 402 that, if the WCET of the task E is 5 ms, the task E occupies 5 orchestration time units on the thread 1.

The task F may be orchestrated after the orchestration of the task E is completed. Because the task F depends on the task D and the task E, a position of the task F is orchestrated after those of the task D and the task E. The task F may be orchestrated on the thread 1 or the thread 2. During the orchestration process, it is also needed to consider whether the task can be executed during one orchestration period when the task is orchestrated on the thread. For example, FIG. 14(c) shows an orchestration result with the task F orchestrated on the thread 2. It may be learned from step 402 that, if the WCET of the task F is 9 ms, the task F occupies 9 orchestration time units on the thread 2. Although the position of the task F on the thread 2 exceeds the orchestration period of the thread 2, a first task (that is, the task C) orchestrated on the thread 2 is not orchestrated from a start position of the thread 2. There are a plurality of idle orchestration time units at the start position of the thread 2, and these idle orchestration time units can exactly ensure completion of the task F. Moreover, when input data is input in a next task period, processing on the input data by another task (such as the task C) on the thread 2 is not affected.

In some other examples, when the at least one task group includes a plurality of task groups, the tasks are orchestrated in the to-be-orchestrated threads according to the priority sequence of the tasks in each task group. If there are a plurality of tasks with same priorities in the tasks, the plurality of tasks with the same priorities may be further sorted based on WCET of the plurality of tasks. Finally, the tasks are orchestrated on each orchestration time unit of the to-be-orchestrated threads based on a sorting result, to obtain the task execution sequence.

It may be learned from the priority sequence of the task group 70 in step 1002 that, there are a plurality of tasks with the same priorities in the task group 70. The priority of the task 1B is the same as that of the task 1C. Regarding such a situation, with reference to the WCET of the plurality of tasks with the same priorities, priority sorting of the task group 70 may be further refined based on the WCET of the plurality of tasks.

It may be learned from step 402 that, the WCET of the task 1B in the task group 70 is 8 ms, and the WCET of the task 1C is 6 ms. If the plurality of tasks are sorted based on the respective WCET thereof in a descending order, a sorting result for the plurality of tasks with the same priorities is: the task 1B>the task 1C.

Subsequently, the sorting result for the plurality of tasks with the same priorities is updated into the priority sequence corresponding to the task group 70, to obtain an updated priority sequence of the task group 70. The updated priority sequence of the task group 70 is: the task 1A>the task 1B>the task 1C.

For example, FIG. 16(b) exemplarily illustrates to-be-orchestrated threads of another processor. There are two to-be-orchestrated threads, which respectively are a thread 3 and a thread 4. The task group 70 and the task group 80 are orchestrated on the thread 3 and the thread 4 shown in FIG. 16 (b).

It may be learned from step 902 that, the task period corresponding to the task group 70 is 20 ms, and the task period corresponding to the task group 80 is 40 ms. Therefore, the orchestration period is 40 ms. The task group 70 is orchestrated twice during the orchestration period, and correspondingly, the task 1A, the task 1B, and the task 1C in the task group 70 are all orchestrated twice. The task group 80 is orchestrated once, and correspondingly, the task 2A, the task 2B, and the task 2C in the task group 80 are orchestrated once.

It may be learned from the task description information of the task group 70 that, WCET of the task 1A in the task group 70 is 4 ms, WCET of the task 1B is 8 ms, and WCET of the task 1C is 6 ms. A unit of the WCET for each task in the task group 70 is millisecond. It may be learned from the task description information of the task group 80 that, WCET of the task 2A in the task group 80 is 6 ms, WCET of the task 2B is 8 ms, and WCET of the task 2C is 5 ms. A unit of the WCET for each task in the task group 80 is also millisecond. Therefore, units of orchestration time units in orchestration periods of the thread 3 and the thread 4 are ms, and one orchestration time unit is 1 ms. Therefore, the orchestration periods of the thread 3 and the thread 4 both include 40 orchestration time units.

According to the updated priority sequence of the task group 70 and the priority sequence of the task group 80, the tasks in the task group 70 and the task group 80 are orchestrated on the orchestration time units of the thread 3 and the thread 4, to obtain a task execution sequence shown in FIG. 16(c). In addition, there may be a plurality of manners for orchestrating the tasks in the task group 70 and the task group 80, provided that the foregoing requirements are satisfied. This is not limited in this disclosure.

A process of orchestrating the task group 70 and the task group 80 according to the updated priority sequence of the task group 70 and the priority sequence of the task group 80 is as follows. First, the task 1A is orchestrated twice and the task 2A is orchestrated once. Because the task 1A and the task 2A respectively belong to two different task groups, there is no priority sequence for the task 1A and the task 2A. To ensure efficient execution of the task group 70 and the task group 80, the task 2A may be orchestrated on the thread 4 when the task 1A is orchestrated on the thread 3 for a first time. When the task 1A is orchestrated on the thread 4 for the first time, the task 2A may be orchestrated on the thread 3.

Because the task 1A is orchestrated twice, when the task 1A is orchestrated for a second time, considering that the task period of the task group 70 is 20 ms, a position of the task 1A needs to be after a 20^{th} orchestration time unit of the orchestration period of the thread 3 or the thread 4, so as to ensure that two pieces of input data received by the task group 70 during the orchestration period can be processed in a timely manner. For example, FIG. 16(c) shows an orchestration result with the task 1A orchestrated on a start orchestration time unit of the thread 3 for a first time. The task 1A is orchestrated for a second time on an orchestration time unit in a middle-later section of the thread 3. The task group 2A is orchestrated on the thread 4. The WCET of the task 1A is 4 ms. If being orchestrated twice, the task 1A occupies 8 orchestration time units on the thread 3. If the WCET of the task 2A is 6 ms, the task 2A occupies 6 orchestration time units on the thread 4.

The task 1B may be orchestrated after the orchestration of the task 1A is completed. Because the task 1B only depends on the task 1A and needs to be orchestrated twice, two positions of the task 1B are respectively orchestrated after those of two tasks 1A. The task 1B may be orchestrated on the thread 1 or the thread 2. For example, FIG. 15(c) shows an orchestration result with the task 1B orchestrated after the two tasks 1A in the thread 3 for a first time and a second time. The WCET of the task 1B is 8 ms. If being orchestrated twice, the task 1B occupies 16 orchestration time units on the thread 3.

The task 1C may be orchestrated after the orchestration of the task 1B is completed. Because the task 1C only depends on the task 1A and needs to be orchestrated twice, two positions of the task 1C are respectively orchestrated after those of the two tasks 1A. Meanwhile, to ensure efficient execution of the task group 70, the task 1C may be orchestrated on the thread 4 when the task 1B is orchestrated on the thread 3. When the task 1B is orchestrated on the thread 4, the task 1C may be orchestrated on the thread 3. For example, FIG. 15(c) shows an orchestration result with the task 1C orchestrated on the thread 4 for a first time and a second time. The WCET of the task 1C is 6 ms. If being orchestrated twice, the task 1C occupies 12 orchestration time units on the thread 4.

The task 2B may be orchestrated after the orchestration of the task 1C is completed. Because the task 2B only depends on the task 2A, the task 2B is orchestrated after a position of the task 2A. The task 2B may be orchestrated on the thread 3 or the thread 4. For example, FIG. 15(c) shows an orchestration result with the task 2B orchestrated on the thread 4. If the WCET of the task 2B is 8 ms, the task 2B occupies 8 orchestration time units on the thread 4.

The task 2C may be orchestrated after the orchestration of the task 2B is completed. Because the task 2C only depends on the task 2B, the task 2C is orchestrated after a position of the task 2B. The task 2C may be orchestrated on the thread 3 or the thread 4. For example, FIG. 15(c) shows an orchestration result with the task 2C orchestrated on the thread 3. If the WCET of the task 2C is 5 ms, the task 2C occupies 5 orchestration time units on the thread 4.

According to the method for controlling a processor to execute tasks provided in this embodiment of this disclosure, when priories of a plurality of tasks are the same, the plurality of tasks are sorted based on the WCET thereof. The plurality of tasks are orchestrated sequentially according to a sequence in which the plurality of tasks are sorted. In this way, it can be ensured that a task that occupies longer time is executed preferentially, so that each task in the task group completes the processing on the input data during the orchestration period, thereby avoiding a situation where the task in the task group may not be able to be executed during the orchestration period. Therefore, the task execution efficiency can be improved.

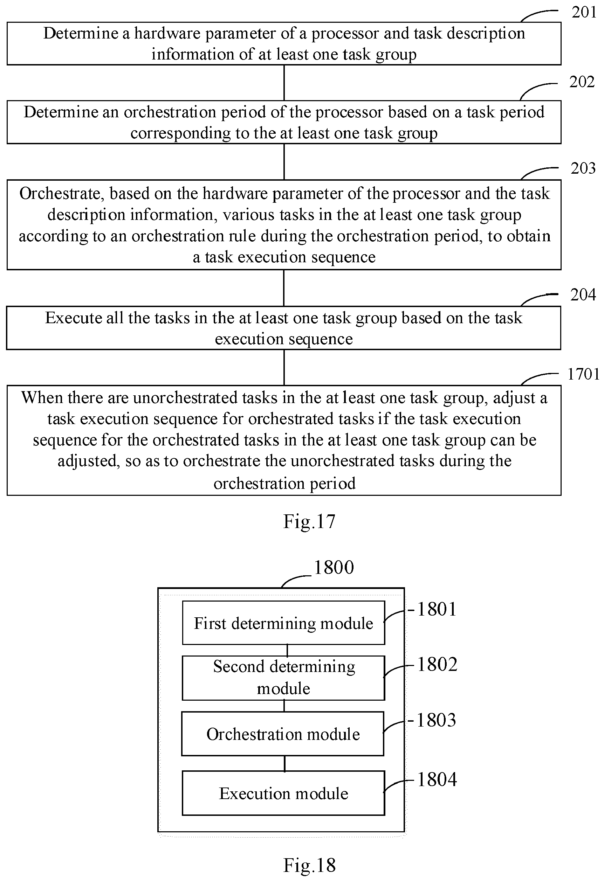

In some embodiments, as shown in FIG. 17, on the basis of the embodiment shown in FIG. 2, the method further includes step 1701.

Step 1701. When there are unorchestrated tasks in the at least one task group, adjust a task execution sequence for orchestrated tasks if the task execution sequence for the orchestrated tasks in the at least one task group can be adjusted, so as to orchestrate the unorchestrated tasks during the orchestration period.

After the orchestration of the task group is completed, it is found that there are still unorchestrated tasks in the task group. For this case, it is first determined whether the orchestrated tasks in the task execution sequence can be adjusted. Whether the orchestrated tasks may be adjusted may be used to determine whether there are a plurality of tasks with the same priority. If there are a plurality of tasks with the same priority, it indicates that the orchestrated tasks may be adjusted. Subsequently, it is tried to adjust positions of the orchestrated tasks, so that the unorganized tasks are orchestrated during the orchestration period. If there is only one task with a same priority, it indicates that the orchestrated tasks cannot be adjusted.

If there are a plurality of adjustable orchestrated tasks, an orchestrated task closest to the unorchestrated task may be first determined according to the priority sequence corresponding to the task group, and a priority of the closest orchestrated task is higher than that of the unorchestrated task. If the closest orchestrated task cannot be adjusted, a next orchestrated task continues to be determined. A priority of the next orchestrated task is at least 2 levels higher than that of the unorchestrated task. The others can be deduced by analogy, until an orchestrated task with a highest priority is determined.

The closest orchestrated task is adjusted if the task corresponding to a closest priority may be adjusted. After the adjustment, whether the unorchestrated task can be orchestrated continues to be determined. If the unorchestrated task cannot be orchestrated, a next orchestrated task continues to be determined. A priority of the next orchestrated task is at least 2 levels higher than that of the unorchestrated task. The others can be deduced by analogy, until a task with a highest priority is determined. If the unorchestrated task can be orchestrated after the adjustment, the task execution sequence may be obtained based on an orchestration result.

For example, the at least one task group is the task group 30, and the orchestrated tasks in the task group 30 include the task A, the task B, the task C, the task D, and the task E. The unorchestrated task is the task F. The priority sequence of the tasks in the task group 30 is: the task A>the task B =the task C>the task D=the task E >the task F. A priority of the task A is 1, priorities of the task B and the task C both are 2, priorities of the task D and the task E both are 3, and a priority of the task F is 4.

Because the priority of the task F is 4, for the task F, whether a corresponding orchestrated task may be adjusted is first determined when the priority is 3. When the priority is 3, there are two corresponding orchestrated tasks. Therefore, if the corresponding orchestrated tasks may be adjusted when the priority is 3, the positions of the task D and the task E may be adjusted when the priority is 3. After the positions of the task D and the task E are adjusted, if it is found that the task F still cannot be orchestrated, whether the corresponding orchestrated task may be adjusted when the priority is 2 continues to be determined. The others can be deduced by analogy, until it is determined whether the task F may be orchestrated when the priority is 1.

After the positions of the task D and the task E are adjusted, if it is found that the task F may be orchestrated, a task orchestration result is obtained based on an orchestration result. In addition, if the unorchestrated task still cannot be orchestrated when the orchestrated task with the highest priority is determined, it indicates that the unorchestrated task in the task group cannot be orchestrated.

According to the method for controlling a processor to execute tasks provided in this embodiment of this disclosure, when there is an unorchestrated task in the task group, a position of the orchestrated task is adjusted, so that the unorchestrated task is orchestrated during the orchestration period. In this way, all the tasks in the task group may be orchestrated during the orchestration period. When the tasks are executed according to the task execution sequence after the orchestration, the task execution efficiency can be improved.

FIG. 18 shows a task orchestration apparatus according to an embodiment of this disclosure. As shown in FIG. 18, a task orchestration apparatus 1800 includes a first determining module 1801, a second determining module 1802, an orchestration module 1803, and an execution module 1804.

The first determining module 1801 is configured to determine a hardware parameter of the processor and task description information of at least one task group. The second determining module 1802 is configured to determine an orchestration period of the processor based on a task period corresponding to the at least one task group. The orchestration module 1803 is configured to orchestrate, based on the hardware parameter of the processor and the task description information, each task in the at least one task group according to an orchestration rule during the orchestration period, to obtain a task execution sequence. The execution module 1804 is configured to execute all the tasks in the at least one task group based on the task execution sequence.

In some embodiments, the orchestration module 1803 is further configured to determine a quantity of to-be-orchestrated threads based on the hardware parameter of the processor; determine orchestration time units corresponding to an orchestration period of the to-be-orchestrated thread based on worst-case execution time WCET, in the task description information, of each task in the at least one task group; and orchestrate, based on the quantity of the to-be-orchestrated threads and the task description information, all the tasks in the at least one task group on each orchestration time unit of the to-be-orchestrated threads according to the orchestration rule, to obtain the task execution sequence.

In some embodiments, the orchestration module 1803 is further configured to determine a priority of each task based on dependency relationships between the tasks in the task description information; and orchestrate, based on the quantity of the to-be-orchestrated threads and the priority of each task, all the tasks on each orchestration time unit of the to-be-orchestrated threads according to a priority sequence of the tasks, to obtain the task execution sequence.

In some embodiments, the orchestration module 1803 is further configured to orchestrate, when priories of a plurality of the tasks are the same, the plurality of tasks on each orchestration time unit of the to-be-orchestrated threads based on the quantity of the to-be-orchestrated threads and WCET of the plurality of tasks, to obtain the task execution sequence.

In some embodiments, the orchestration module 1803 is further configured to adjust, when there are unorchestrated tasks in the at least one task group, a task execution sequence for orchestrated tasks if the task execution sequence for the orchestrated tasks in the at least one task group can be adjusted, so as to orchestrate the unorchestrated tasks during the orchestration period.

In some embodiments, the second determining module 1802 is further configured to determine a task group quantity of the at least one task group; and determine the orchestration period of the processor based on the task group quantity and the task period corresponding to the task group.

In some embodiments, the second determining module 1802 is further configured to determine, when there are a plurality of task groups, the orchestration period of the processor based on a least common multiple of task periods respectively corresponding to the plurality of task groups; and when there is one task group, determine the orchestration period of the processor based on the task period corresponding to the task group.

In some embodiments, when there are a plurality of task groups, the orchestration module 1803 is further configured to determine that there is a target task group in the at least one task group that has a task period different from the orchestration period of the processor; determine a quantity of orchestrations for the target task group based on the task period of the target task group and the orchestration period of the processor; determine a plurality of sub-orchestration periods corresponding to the target task group based on the orchestration period and the quantity of orchestrations; and orchestrate, based on the hardware parameter of the processor and the task description information, each task in the target task group according to the orchestration rule during each sub-orchestration period, and orchestrate each task in a task group, other than the target task group, in the at least one task group during the orchestration period, to obtain the task execution sequence.

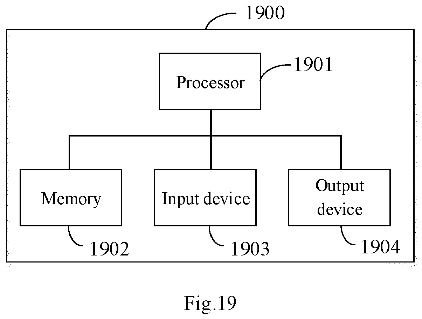

FIG. 19 is a diagram of a structure of an electronic device according to an embodiment of this disclosure. As shown in FIG. 19, an electronic device 1900 includes one or more processors 1901 and a memory 1902.

The processor 1901 may be a central processing unit (CPU) or another form of processing unit having a data processing capability and/or an instruction execution capability, and may control another component in the electronic device 1900 to perform a desired function.

The memory 1902 may include one or more computer program products. The computer program product may include various forms of computer readable storage media, such as a volatile memory and/or a non-volatile memory. The volatile memory may include, for example, a random access memory (RAM) and/or a cache. The non-volatile memory may include, for example, a read-only memory (ROM), a hard disk, and a flash memory. One or more computer program instructions may be stored on the computer readable storage medium. The processor 1901 may execute the program instruction to implement the task orchestration method according to various embodiments of this disclosure that are described above and/or other desired functions.

In an example, the electronic device 1900 may further include an input device 1903 and an output device 1904. These components are connected to each other through a bus system and/or another form of connection mechanism (not shown).

Certainly, for simplicity, FIG. 19 shows only some of components in the electronic device 1900 that are related to this disclosure, and components such as a bus and an input/output interface are omitted. In addition, according to specific application situations, the electronic device 1900 may further include any other appropriate components.

In addition to the foregoing method and device, the embodiments of this disclosure may also relate to a computer program product, which includes computer program instructions. When the computer program instructions are run by a processor, the processor is enabled to perform the steps, of the task orchestration method according to the embodiments of this disclosure, that are described in the "exemplary method" part of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the task orchestration method according to the embodiments of this disclosure, that are described in the "exemplary method" part of this specification.

The computer readable storage medium may be one readable medium or any combination of a plurality of readable media. The readable medium may be a readable signal medium or a readable storage medium. The readable storage medium may include, for example, but is not limited to a system, an apparatus, or a device of electricity, magnetism, light, electromagnetism, infrared ray, or semiconductor, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, it should be pointed out that the advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A method for controlling a processor to execute tasks, comprising:
determining a hardware parameter of the processor and task description information of at least one task group;
determining an orchestration period of the processor based on a task period corresponding to the at least one task group;
orchestrating, based on the hardware parameter of the processor and the task description information, each task in the at least one task group according to an orchestration rule during the orchestration period, to obtain a task execution sequence; and
executing all the tasks in the at least one task group based on the task execution sequence.

2. The method according to claim 1, wherein the orchestrating, based on the hardware parameter of the processor and the task description information, each task in the at least one task group according to an orchestration rule during the orchestration period, to obtain a task execution sequence, comprises:
determining a quantity of to-be-orchestrated threads based on the hardware parameter of the processor;
determining orchestration time units corresponding to an orchestration period of the to-be-orchestrated thread based on worst-case execution time WCET, in the task description information, of each task in the at least one task group; and
orchestrating, based on the quantity of the to-be-orchestrated threads and the task description information, all the tasks in the at least one task group on each orchestration time unit of the to-be-orchestrated threads according to the orchestration rule, to obtain the task execution sequence.

3. The method according to claim 2, wherein the orchestrating, based on the quantity of the to-be-orchestrated threads and the task description information, all the tasks in the at least one task group on each orchestration time unit of the to-be-orchestrated threads according to the orchestration rule, to obtain the task execution sequence, comprises:
determining a priority of each task based on dependency relationships between the tasks in the task description information; and
orchestrating, based on the quantity of the to-be-orchestrated threads and the priority of each task, all the tasks on each orchestration time unit of the to-be-orchestrated threads according to a priority sequence of the tasks, to obtain the task execution sequence.

4. The method according to claim 3, wherein the orchestrating, based on the quantity of the to-be-orchestrated threads and the priority of each task, all the tasks on each orchestration time unit of the to-be-orchestrated threads according to a priority sequence of the tasks, to obtain the task execution sequence, comprises:
When the priories of a plurality of the tasks are the same, orchestrating the plurality of tasks on each orchestration time unit of the to-be-orchestrated threads based on the quantity of the to-be-orchestrated threads and the WCET of the plurality of tasks, to obtain the task execution sequence.

5. The method according to any one of claims 1 to 4, wherein the method further comprises:
when there are unorchestrated tasks in the at least one task group, adjusting a task execution sequence for orchestrated tasks if the task execution sequence for the orchestrated tasks in the at least one task group can be adjusted, so as to orchestrate the unorchestrated tasks during the orchestration period.

6. The method according to any one of claims 1 to 4, wherein the determining an orchestration period of the processor based on a task period corresponding to the at least one task group comprises:
determining a task group quantity of the at least one task group; and
determining the orchestration period of the processor based on the task group quantity and the task period corresponding to the task group.

7. The method according to claim 6, wherein the determining the orchestration period of the processor based on the task group quantity and the task period corresponding to the task group comprises:
when there are a plurality of task groups, determining the orchestration period of the processor based on a least common multiple of task periods respectively corresponding to the plurality of task groups; and
when there is one task group, determining the orchestration period of the processor based on the task period corresponding to the task group.

8. The method according to claim 7, wherein when there are a plurality of task groups, the orchestrating, based on the hardware parameter of the processor and the task description information, each task in the at least one task group according to an orchestration rule during the orchestration period, to obtain a task execution sequence, comprises:
determining that there is a target task group in the at least one task group that has a task period different from the orchestration period of the processor;
determining a quantity of orchestrations for the target task group based on the task period of the target task group and the orchestration period of the processor;
determining a plurality of sub-orchestration periods corresponding to the target task group based on the orchestration period and the quantity of orchestrations; and
orchestrating, based on the hardware parameter of the processor and the task description information, each task in the target task group according to the orchestration rule during each sub-orchestration period, and orchestrating each task in a task group other than the target task group in the at least one task group during the orchestration period, to obtain the task execution sequence.

9. An apparatus for controlling a processor to execute tasks, comprising:
a first determining module, configured to determine a hardware parameter of the processor and task description information of at least one task group;
a second determining module, configured to determine an orchestration period of the processor based on a task period corresponding to the at least one task group;
an orchestration module, configured to orchestrate, based on the hardware parameter of the processor and the task description information, various tasks in the at least one task group according to an orchestration rule during the orchestration period, to obtain a task execution sequence; and
an execution module, configured to execute all the tasks in the at least one task group based on the task execution sequence.

10. A non-transitory computer readable storage medium, wherein the storage medium stores a computer program, and the computer program is used for implementing the task orchestration method according to any one of claims 1 to 8.

11. An electronic device, wherein the electronic device comprises:
a processor; and a memory, configured to store processor-executable instructions,
wherein the processor is configured to read the executable instructions from the memory, and execute the instructions to implement the task orchestration method according to any one of claims 1 to 8.
